(19) Europäisches Patentamt
European Patent Office
Office européen des brevets

(11) EP 4 403 997 A1

(12) EUROPEAN PATENT APPLICATION

(43) Date of publication:
24.07.2024 Bulletin 2024/30

(21) Application number: 24152417.2

(22) Date of filing: 17.01.2024

(51) International Patent Classification (IPC):
G03B 17/17 (2021.01)    G03B 30/00 (2021.01)
G02B 5/00 (2006.01)

(52) Cooperative Patent Classification (CPC):
G02B 5/003; G03B 17/17; G03B 30/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.01.2023 US 202363480310 P

(71) Applicant: Largan Precision Co. Ltd.
Taichung City 408 (TW)

(72) Inventors:
• TUNG, Wei-Che
  408 Taichung City (TW)

• FAN, Chen-Wei
  408 Taiching City (TW)
• CHANG, Lin-An
  408 Taichung City (TW)
• LIU, Ssu-Hsin
  408 Taichung City (TW)

(74) Representative: Jakelski & Althoff
Patentanwälte PartG mbB
Patentanwälte
Partnerschaftsgesellschaft
Mollenbachstraße 37
71229 Leonberg (DE)

(54) OPTICAL IMAGING MODULE AND ELECTRONIC DEVICE

(57) An optical imaging module includes an optical imaging lens assembly, a light path folding element and a light blocking element. The optical imaging lens assembly includes at least one optical lens element, and an optical axis passes through the optical lens element. The light path folding element has an incident surface, an emitting surface and at least one optical reflecting surface, and the light path folding element is disposed on an image side of the optical imaging lens assembly. The light blocking element is disposed on at least one of the optical lens element and the light path folding element, and includes an opening hole and a light blocking surface. The light blocking surface has a plurality of first anti-reflective structures, and each of the first anti-reflective structures is recessed from the light blocking surface toward a direction away from the light path folding element.

Fig. 1A

**Description**

**BACKGROUND**

Technical Field

The present disclosure relates to an optical imaging module. More particularly, the present disclosure relates to an optical imaging module which is applicable to portable electronic device.

Description of Related Art

In recent years, portable electronic devices have developed rapidly. For example, intelligent electronic devices and tablets have been filled in the lives of modern people, and optical imaging modules mounted on portable electronic devices have also prospered. However, as the technology advances, the quality requirements of optical imaging module are becoming higher and higher. Therefore, developing a folding optical imaging module that can reduce the volume of the optical imaging module by the light path folding element has become an important and urgent problem in the industry.

**SUMMARY**

According to one aspect of the present disclosure, an optical imaging module includes an optical imaging lens assembly, a light path folding element and a light blocking element. The optical imaging lens assembly includes at least one optical lens element, and an optical axis passes through the at least one optical lens element. The light path folding element has an incident surface, an emitting surface and at least one optical reflecting surface, and the light path folding element is disposed on an image side of the optical imaging lens assembly. The light blocking element is disposed on at least one of the at least one optical lens element and the light path folding element, and the light blocking element includes an opening hole and a light blocking surface. The opening hole is corresponded to one of the incident surface and the emitting surface of the light path folding element. The light blocking surface is adjacent to the opening hole, and the light blocking surface is opposite to one of the incident surface, the emitting surface and the at least one optical reflecting surface of the light path folding element. The light blocking surface has a plurality of first anti-reflective structures, and each of the first anti-reflective structures is recessed from the light blocking surface toward a direction away from the light path folding element.

According to the optical imaging module of the foregoing aspect, the first anti-reflective structures can be integrally formed with the light blocking element.

According to the optical imaging module of the foregoing aspect, each of the first anti-reflective structures can extend toward a first direction, and the first direction is orthogonal to the optical axis.

According to the optical imaging module of the foregoing aspect, a number of the first anti-reflective structures is N1, and the following condition can be satisfied: $2 \leq N1 \leq 246$.

According to the optical imaging module of the foregoing aspect, the number of the first anti-reflective structures is N1, and the following condition can be satisfied: $2 \leq N1 \leq 52$.

According to the optical imaging module of the foregoing aspect, on a cross-sectional plane vertical to a first direction, each of the first anti-reflective structures can have a bottom end and two top ends, and distances from the bottom end to the two top ends are different, respectively.

According to the optical imaging module of the foregoing aspect, each of the first anti-reflective structures can extend toward a first direction, a surface of each of the first anti-reflective structures can have a plurality of second anti-reflective structures, each of the second anti-reflective structures is recessed on the surface of each of the first anti-reflective structures, and each of the second anti-reflective structures extends toward a second direction.

According to the optical imaging module of the foregoing aspect, the second anti-reflective structures can be integrally formed with the light blocking element.

According to the optical imaging module of the foregoing aspect, the second direction can be orthogonal to the first direction.

According to the optical imaging module of the foregoing aspect, the second anti-reflective structures can be regularly arranged along an extension path in the first direction.

According to the optical imaging module of the foregoing aspect, on the light blocking element, a number of the first anti-reflective structures is N1, a number of the second anti-reflective structures is N2T, and the following condition can be satisfied: N1 < N2T.

According to the optical imaging module of the foregoing aspect, a number of the second anti-reflective structures on one first anti-reflective structure is N2S, and the following condition can be satisfied: $68 \leq N2S \leq 1100$.

According to the optical imaging module of the foregoing aspect, on the light blocking element, the number of the first anti-reflective structures is N1, the number of the second anti-reflective structures is N2T, and the following condition can be satisfied: $570 \leq N1 + N2T \leq 3620$.

According to another aspect of the present disclosure, an optical imaging module includes an optical imaging lens assembly, a light path folding element and a light blocking element. The optical imaging lens assembly includes at least one optical lens element, and an optical axis passes through the at least one optical lens element. The light path folding element has an incident surface, an emitting surface and at least one optical reflecting surface, and the light path folding element is disposed on an image side of the optical imaging lens assembly. The light blocking element is disposed on one of the at least one optical lens element and the light path folding element, and the light blocking element includes a light blocking surface. The light blocking surface is opposite to one of the incident surface, the emitting surface and the at least one optical reflecting surface of the light path folding element. The light blocking surface has a plurality of first anti-reflective structures, and each of the first anti-reflective structures is recessed from the light blocking surface toward a direction away from the light path folding element.

According to the optical imaging module of the foregoing aspect, the first anti-reflective structures can be integrally formed with the light blocking element.

According to the optical imaging module of the foregoing aspect, each of the first anti-reflective structures can extend toward a first direction, and the first direction is orthogonal to the optical axis.

According to the optical imaging module of the foregoing aspect, a number of the first anti-reflective structures is N1, and the following condition can be satisfied: $2 \leq N1 \leq 246$.

According to the optical imaging module of the foregoing aspect, the number of the first anti-reflective structures is N1, and the following condition can be satisfied: $2 \leq N1 \leq 52$.

According to the optical imaging module of the foregoing aspect, on a cross-sectional plane vertical to a first direction, each of the first anti-reflective structures can have a bottom end and two top ends, and distances from the bottom end to the two top ends are different, respectively.

According to the optical imaging module of the foregoing aspect, each of the first anti-reflective structures can extend toward a first direction, a surface of each of the first anti-reflective structures can have a plurality of second anti-reflective structures, each of the second anti-reflective structures is recessed on the surface of each of the first anti-reflective structures, and each of the second anti-reflective structures extends toward a second direction.

According to the optical imaging module of the foregoing aspect, the second anti-reflective structures can be integrally formed with the light blocking element.

According to the optical imaging module of the foregoing aspect, the second direction can be orthogonal to the first direction.

According to the optical imaging module of the foregoing aspect, the second anti-reflective structures can be regularly arranged along an extension path in the first direction.

According to the optical imaging module of the foregoing aspect, on the light blocking element, a number of the first anti-reflective structures is N1, a number of the second anti-reflective structures is N2T, and the following condition can be satisfied: $N1 < N2T$.

According to the optical imaging module of the foregoing aspect, a number of the second anti-reflective structures on one first anti-reflective structure is N2S, and the following condition can be satisfied: $68 \leq N2S \leq 1100$.

According to the optical imaging module of the foregoing aspect, on the light blocking element, the number of the first anti-reflective structures is N1, the number of the second anti-reflective structures is N2T, and the following condition can be satisfied: $570 \leq N1 + N2T \leq 3620$.

According to another aspect of the present disclosure, an electronic device includes the optical imaging module of any one of the aforementioned aspects.

## BRIEF DESCRIPTION OF THE DRAWINGS

The present disclosure can be more fully understood by reading the following detailed description of the embodiment, with reference made to the accompanying drawings as follows:

Fig. 1A is a schematic view of an optical imaging module according to the 1st Embodiment of the present disclosure.

Fig. 1B is an exploded view of the optical imaging module according to the 1st Embodiment in Fig. 1A.

Fig. 1C is another exploded view of the optical imaging module according to the 1st Embodiment in Fig. 1A.

Fig. 1D is a schematic view of the light blocking element of the 1st Example according to the 1st Embodiment in Fig. 1A.

Fig. 1E is a partial enlarged view of a cross-sectional view of the light blocking element of the 1st Example along line 1E-1E according to the 1st Embodiment in Fig. 1D.

Fig. 1F is a partial enlarged view of the light blocking element of the 1st Example according to the 1st Embodiment in Fig. 1D.

Fig. 1G is a schematic view of the light blocking element of the 2nd Example according to the 1st Embodiment in Fig. 1A.

Fig. 1H is a partial enlarged view of a cross-sectional view of the light blocking element of the 2nd Example along line 1H-1H according to the 1st Embodiment in Fig. 1G.

Fig. 1I is a partial enlarged view of the light blocking element of the 2nd Example according to the 1st Embodiment in Fig. 1G.

Fig. 1J is a schematic view of the light blocking element of the 3rd Example according to the 1st Embodiment in Fig. 1A.

Fig. 1K is a partial enlarged view of a cross-sectional view of the light blocking element of the 3rd Example along line 1K-1K according to the 1st Embodiment in Fig. 1J.

Fig. 1L is a partial enlarged view of the light blocking element of the 3rd Example according to the 1st Embodiment in Fig. 1J.

Fig. 2A is a schematic view of an optical imaging module according to the 2nd Embodiment of the present disclosure.

Fig. 2B is an exploded view of the optical imaging module according to the 2nd Embodiment in Fig. 2A.

Fig. 2C is a partial enlarged view of the light blocking element of the 1st Example according to the 2nd Embodiment in Fig. 2A.

Fig. 2D is another partial enlarged view of the light blocking element of the 1st Example according to the 2nd Embodiment in Fig. 2A.

Fig. 2E is a partial enlarged view of the light blocking element of the 2nd Example according to the 2nd Embodiment in Fig. 2A.

Fig. 2F is another partial enlarged view of the light blocking element of the 2nd Example according to the 2nd Embodiment in Fig. 2A.

Fig. 3A is a schematic view of an optical imaging module according to the 3rd Embodiment of the present disclosure.

Fig. 3B is an exploded view of the optical imaging module according to the 3rd Embodiment in Fig. 3A.

Fig. 3C is a schematic view of the light blocking element of the 1st Example according to the 3rd Embodiment in Fig. 3A.

Fig. 3D is another schematic view of the light blocking element of the 1st Example according to the 3rd Embodiment in Fig. 3A.

Fig. 4A is a schematic view of an electronic device according to the 4th Embodiment of the present disclosure.

Fig. 4B is another schematic view of the electronic device according to the 4th Embodiment in Fig. 4A.

Fig. 4C is a schematic view of an image captured by the ultra-wide angle camera module of the electronic device according to the 4th Embodiment in Fig. 4A.

Fig. 4D is a schematic view of an image captured by the high resolution camera module of the electronic device according to the 4th Embodiment in Fig. 4A.

Fig. 4E is a schematic view of an image captured by the telephoto camera modules of the electronic device according to the 4th Embodiment in Fig. 4A.

Fig. 5 is a schematic view of an electronic device according to the 5th Embodiment of the present disclosure.

Fig. 6A shows a schematic view of a vehicle device according to the 6th Embodiment of the present disclosure.

Fig. 6B shows another schematic view of the vehicle device according to the 6th Embodiment in Fig. 6A.

Fig. 6C shows further another schematic view of the vehicle device according to the 6th Embodiment in Fig. 6A.

## DETAILED DESCRIPTION

The present disclosure provides an optical imaging module, including an optical imaging lens assembly, a light path folding element and a light blocking element. The optical imaging lens assembly includes at least one optical lens element, and an optical axis passes through the at least one optical lens element. The light path folding element has an incident surface, an emitting surface and at least one optical reflecting surface, and the light path folding element is disposed on an image side of the optical imaging lens assembly. The light blocking element is disposed on at least one or one of the at least one optical lens element and the light path folding element, and the light blocking element includes a light blocking surface. The light blocking surface is opposite to one of the incident surface, the emitting surface and the at least one optical reflecting surface of the light path folding element. The light blocking surface has a plurality of first anti-reflective structures, and each of the first anti-reflective structures is recessed from the light blocking surface toward a direction away from the light path folding element. Therefore, the light is reflected by the light path folding element, which is favorable for the miniaturization design of the optical imaging module. Furthermore, the incident surface, the emitting surface and the optical reflecting surface of the light path folding element are all the interfaces that are easy to form the stray light, so that the reflection of the stray light can be avoided by disposing the light blocking surface with the anti-reflective structures, which is favorable for improving the imaging quality.

Specifically, the light blocking element can include an opening hole, wherein the opening hole is corresponded to one of the incident surface and the emitting surface of the light path folding element, and the light blocking surface is adjacent to the opening hole. In detail, the light blocking element can be a lens barrel, a fixing element, a lens carrier, a reflective element carrier, or a baffle, which is not limited thereto.

The optical axis of the optical imaging module can travel through the incident surface, the emitting surface and the optical reflecting surface of the light path folding element. Therefore, the travelling direction of the optical axis of the optical imaging module can be changed by the light path folding element.

The optical reflecting surface can utilize a high-reflecting film to reflect an imaging light, also can utilize an optical total reflection phenomenon to reflect the imaging light.

The first anti-reflective structures are integrally formed with the light blocking element. Therefore, the production time can be reduced, and the manufacture can be performed by the plastic injection molding process.

Each of the first anti-reflective structures extends toward a first direction, and the first direction is orthogonal to the optical axis. Further, the optical axis orthogonal to the first direction is the optical axis defined by the optical lens element, and the stray light is incident along the optical axis. Therefore, it is favorable for effectively reducing the reflection of the stray light by arranging the first anti-reflective structure extending along a direction orthogonal to the optical axis.

When a number of the first anti-reflective structures is N1, the following condition can be satisfied: $2 \leq N1 \leq 246$. Therefore, the anti-reflective ability can be improved. Further, the following condition can be satisfied: $2 \leq N1 \leq 52$. Therefore, the appropriate number of the first anti-reflective structures can take into account both the anti-reflective performance and the mass production.

On a cross-sectional plane vertical to the first direction, each of the first anti-reflective structures has a bottom end and two top ends, and the distances from the bottom end to the two top ends are different, respectively. Therefore, the contour of the first anti-reflective structures can be adjusted according to the situation so as to change the reflection path of the stray light and avoid one more the reflection to the imaging light path.

A surface of each of the first anti-reflective structures has a plurality of second anti-reflective structures, each of the second anti-reflective structures is recessed on the surface of each of the first anti-reflective structures, and each of the second anti-reflective structures extends toward a second direction. Therefore, the second anti-reflective structures disposed on the first anti-reflective structures can improve the anti-reflective effect.

The second anti-reflective structures are integrally formed with the light blocking element. Therefore, the production time can be reduced.

The second direction is orthogonal to the first direction. Therefore, the reflection path of the stray light can be destroyed by two anti-reflective structures with different extending directions.

The second anti-reflective structures are regularly arranged along an extension path in the first direction. Therefore, the stability of the quality can be improved.

On the light blocking element, when a number of the first anti-reflective structures is N1, a number of the second anti-reflective structures is N2T, the following condition can be satisfied: N1 < N2T. Therefore, the anti-reflective ability can be improved by two anti-reflective structures with different setting densities.

On one first anti-reflective structure, when a number of the second anti-reflective structures is N2S, the following condition can be satisfied: 68 ≤ N2S ≤ 1100. Therefore, the appropriate number of the second anti-reflective structures can improve the anti-reflective ability, and the number of the anti-reflective structure can be adjusted according to different design requirements.

On the light blocking element, when the number of the first anti-reflective structures is N1, the number of the second anti-reflective structures is N2T, the following condition can be satisfied: 570 ≤ N1 + N2T ≤ 3620. Therefore, the anti-reflective ability can be improved by the larger total number of the anti-reflective structure.

Each of the aforementioned features of the optical imaging module can be utilized in various combinations for achieving the corresponding effects.

The present disclosure provides an electronic device, which includes the aforementioned optical imaging module.

According to the aforementioned embodiment, specific embodiments and examples are provided, and illustrated via figures.

<1st Embodiment>

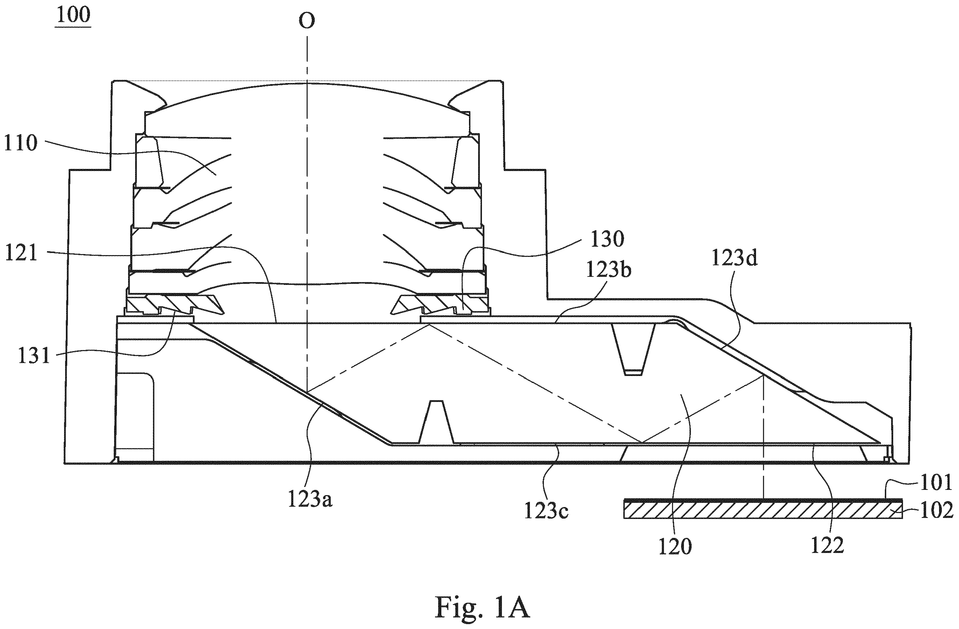

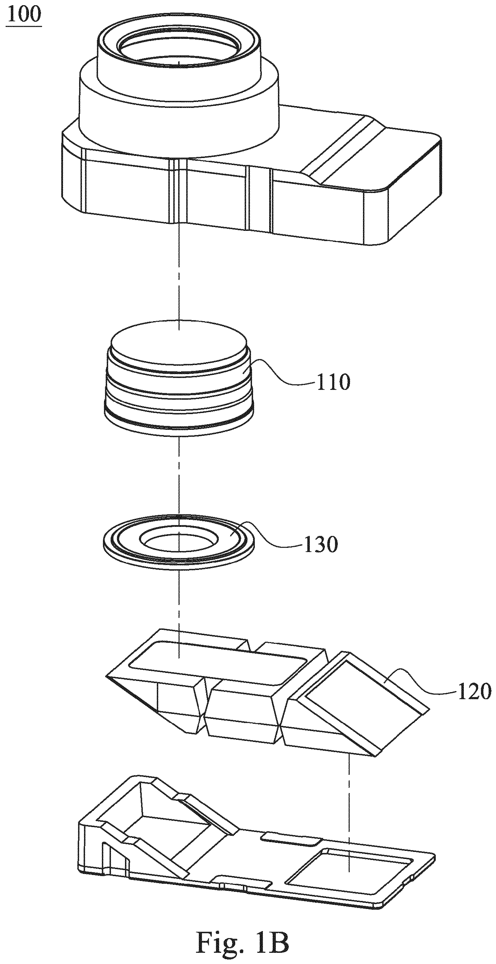

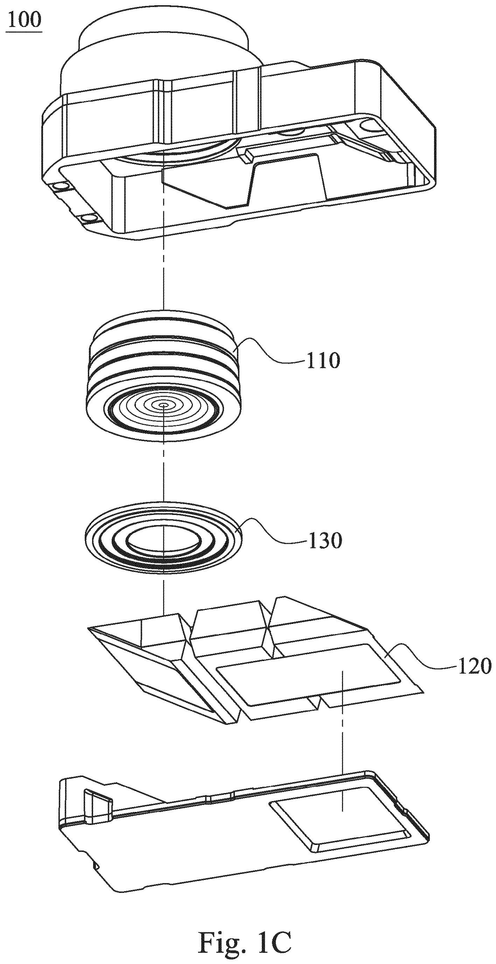

Fig. 1A is a schematic view of an optical imaging module 100 according to the 1st Embodiment of the present disclosure. Fig. 1B is an exploded view of the optical imaging module 100 according to the 1st Embodiment in Fig. 1A. Fig. 1C is another exploded view of the optical imaging module 100 according to the 1st Embodiment in Fig. 1A. In Fig. 1A to Fig. 1C, the optical imaging module 100 includes an optical imaging lens assembly 110, a light path folding element 120 and a light blocking element 130. The optical imaging lens assembly 110 includes at least one optical lens element (not shown in drawings), and an optical axis O passes through the optical lens element. The light path folding element 120 has an incident surface 121, an emitting surface 122 and four optical reflecting surfaces 123a, 123b, 123c, 123d, and the light path folding element 120 is disposed on an image side of the optical imaging lens assembly 110. Specifically, according to the 1st Embodiment in Fig. 1A, the light path folding element 120 includes two optical surfaces, one of the optical surface is opposite to the optical imaging lens assembly 110, and includes the incident surface 121 and the optical reflecting surface 123b at the same time, while the other optical surface is opposite to the image sensor 102, and includes the emitting surface 122 and the optical reflecting surface 123c at the same time. The image sensor 102 is disposed on an imaging surface 101 of the optical imaging module 100. Therefore, after a light enters the light path folding element 120 from the incident surface 121, the light is internally reflected by the optical reflecting surfaces 123a, 123b, 123c, 123d in sequence, and the light enters the image sensor 102 from the emitting surface 122 finally. The light blocking element 130 is a baffle, which is disposed on the optical lens element, and the light blocking element 130 includes a light blocking surface 131. The light blocking surface 131 is opposite to the incident surface 121 of the light path folding element 120. Therefore, the light is reflected by the light path folding element 120, which is favorable for the miniaturization design of the optical imaging module 100.

In detail, the optical axis O of the optical imaging module 100 can travel through the incident surface 121, the emitting surface 122 and the optical reflecting surfaces 123a, 123b, 123c, 123d of the light path folding element 120, so that the travelling direction of the optical axis O of the optical imaging module 100 can be changed by the light path folding element 120. Further, the optical reflecting surfaces 123a, 123b, 123c, 123d can utilize the high-reflecting film to reflect the imaging light; or the optical reflecting surfaces 123a, 123b, 123c, 123d also can utilize the optical total reflection phenomenon to reflect the imaging light.

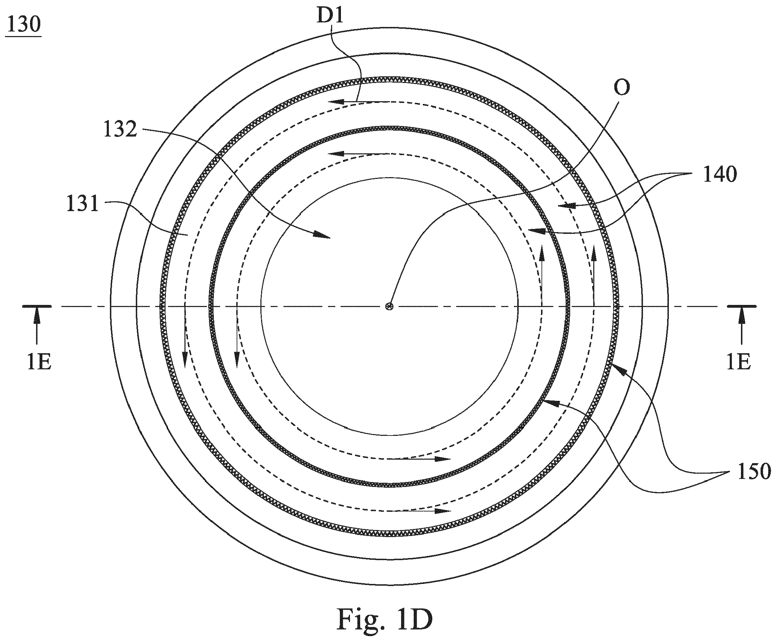

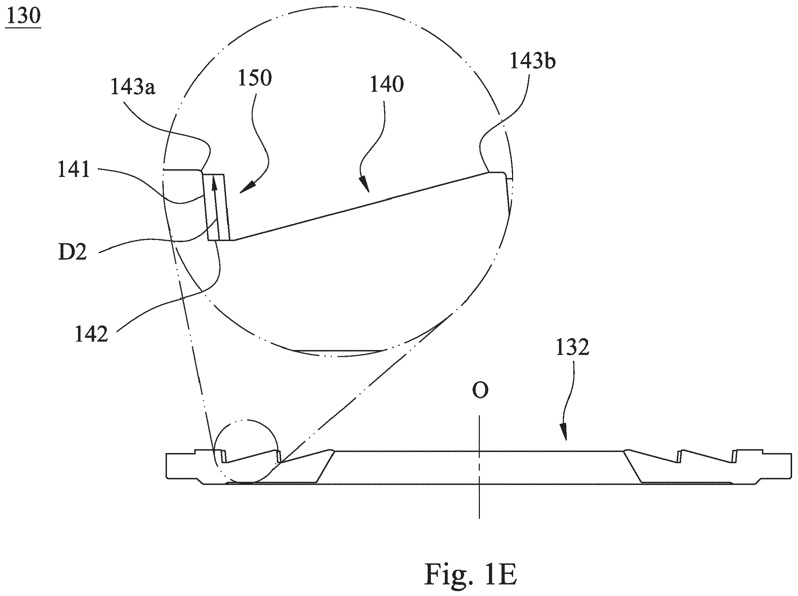

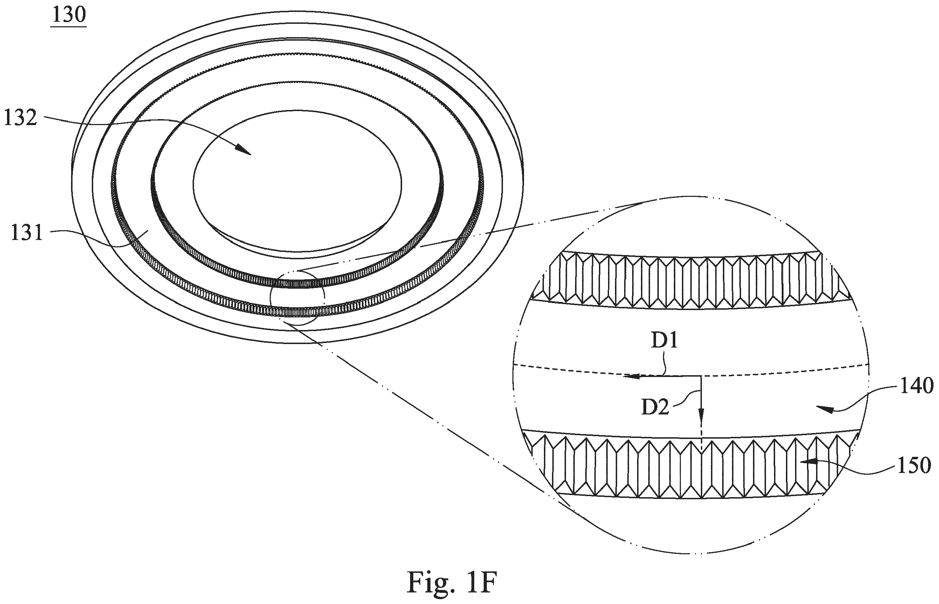

Fig. 1D is a schematic view of the light blocking element 130 of the 1st Example according to the 1st Embodiment in Fig. 1A. Fig. 1E is a partial enlarged view of a cross-sectional view of the light blocking element 130 of the 1st Example along line 1E-1E according to the 1st Embodiment in Fig. 1D. Fig. 1F is a partial enlarged view of the light blocking element 130 of the 1st Example according to the 1st Embodiment in Fig. 1D. In Fig. 1D to Fig. 1F, the light blocking element 130 includes an opening hole 132, and the opening hole 132 is corresponded to the incident surface 121 of the light path folding element 120. The light blocking surface 131 is adjacent to the opening hole 132, and the light blocking surface 131 has a plurality of first anti-reflective structures 140, each of the first anti-reflective structures 140 is recessed from the light blocking surface 131 toward a direction away from the light path folding element 120.

Further, each of the first anti-reflective structures 140 extends toward a first direction D1, and the first direction D1 is orthogonal to the optical axis O. The stray light is incident along the direction of the optical axis O, so that it is favorable for effectively reducing the reflection of the stray light by arranging the first anti-reflective structure 140 extending along a direction orthogonal to the optical axis O. Specifically, the incident surface 121, the emitting surface 122 and the optical reflecting surfaces 123a, 123b, 123c, 123d of the light path folding element 120 are all the interfaces that are easy to form the stray light, so that the reflection of the stray light can be avoided by disposing the light blocking surface 131 with the first anti-reflective structures 140, which is favorable for improving the imaging quality.

Moreover, a surface 141 of each of the first anti-reflective structures 140 has a plurality of second anti-reflective structures 150. Each of the second anti-reflective structures 150 is recessed on the surface 141 of each of the first anti-reflective structures 140, and each of the second anti-reflective structures 150 extends toward a second direction D2. Therefore, the second anti-reflective structures 150 disposed on the first anti-reflective structures 140 can improve the anti-reflective effect. Further, the first anti-reflective structures 140 and the second anti-reflective structures 150 are integrally formed with the light blocking element 130, so that the production time can be reduced. The second anti-reflective structures 150 are regularly arranged along an extension path in the first direction D1, thus the stability of the quality can be improved. Further, the second direction D2 is orthogonal to the first direction D1, so that the reflection path of the stray light can be destroyed by two anti-reflective structures with different extending directions.

In Fig. 1E, on a cross-sectional plane (not shown in drawings) vertical to the first direction D1, each of the first anti-reflective structures 140 has a bottom end 142 and two top ends 143a, 143b, and the distances from the bottom end 142 to the two top ends 143a, 143b are different, respectively. Therefore, the contour of the first anti-reflective structures 140 can be adjusted according to the situation so as to change the reflection path of the stray light and avoid one more the reflection to the imaging light path.

In Fig. 1D to Fig. 1F, a number of the first anti-reflective structures 140 is N1; a number of the second anti-reflective structures 150 on one first anti-reflective structure 140 is N2S; a number of the second anti-reflective structures 150 is N2T, and the following conditions shown in Table 1 are satisfied. Therefore, the anti-reflective ability can be improved by two anti-reflective structures with the different setting densities and the appropriate number of the structures.

| Table 1 - 1st Example of 1st Embodiment | | | |
|---|---|---|---|
| N1 | 2 | N2S | 360 |
| N2T | 720 | N1 + N2T | 722 |

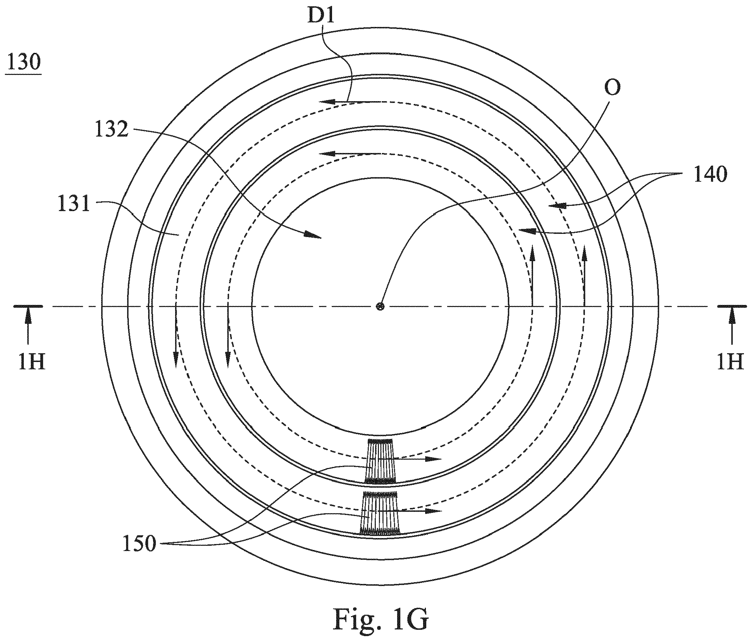

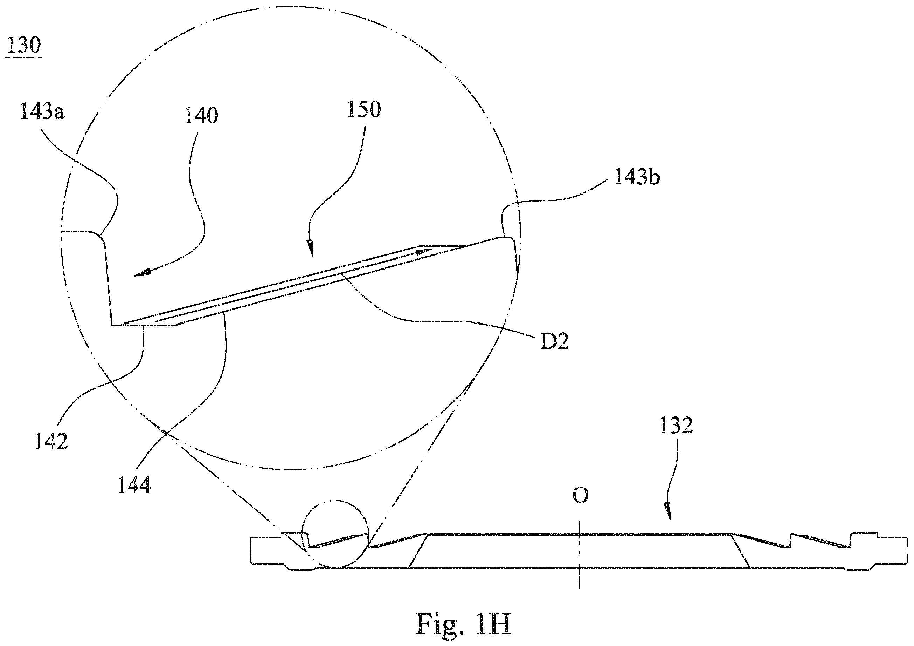

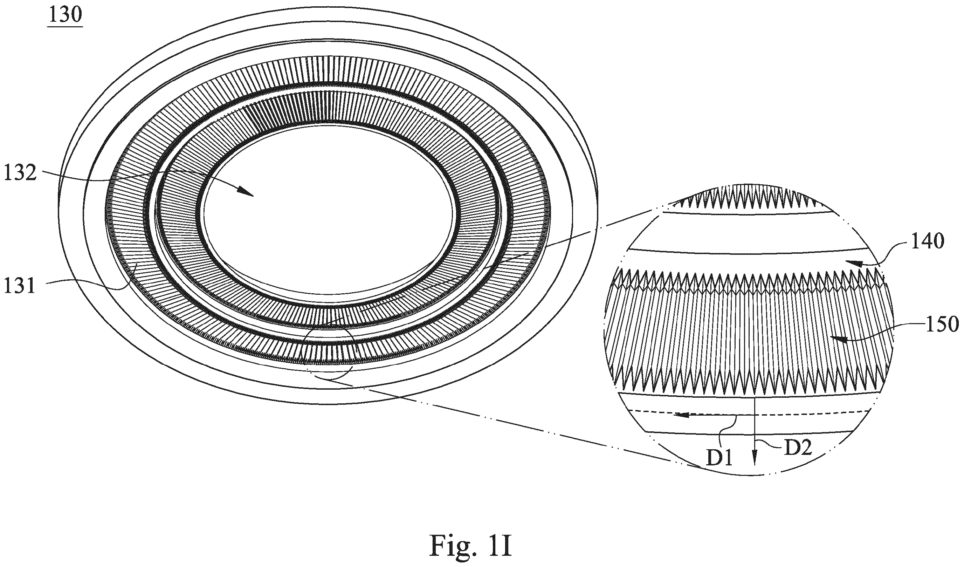

Fig. 1G is a schematic view of the light blocking element 130 of the 2nd Example according to the 1st Embodiment in Fig. 1A. Fig. 1H is a partial enlarged view of a cross-sectional view of the light blocking element 130 of the 2nd Example along line 1H-1H according to the 1st Embodiment in Fig. 1G. Fig. 1I is a partial enlarged view of the light blocking element 130 of the 2nd Example according to the 1st Embodiment in Fig. 1G. In Fig. 1G to Fig. 1I, the light blocking element 130 includes an opening hole 132, and the light blocking surface 131 is adjacent to the opening hole 132. The light blocking surface 131 has a plurality of first anti-reflective structures 140, and each of the first anti-reflective structures 140 extends toward a first direction D1, the first direction D1 is orthogonal to the optical axis O. Further, a surface 144 of each of the first anti-reflective structures 140 has a plurality of second anti-reflective structures 150. Each of the second anti-reflective structures 150 is recessed on the surface 144 of each of the first anti-reflective structures 140, and extends toward a second direction D2. The second anti-reflective structures 150 are regularly arranged along an extension path in the first direction D1. Therefore, the second anti-reflective structures 150 disposed on the first anti-reflective structures 140 can improve the anti-reflective effect. Furthermore, in order to clarify, the second anti-reflective structures 150 in Fig. 1G only show a partial line section, and the actual second anti-reflective structures 150 are arranged in a full circle.

In Fig. 1G to Fig. 1I, a number of the first anti-reflective structures 140 is N1; a number of the second anti-reflective structures 150 on one first anti-reflective structure 140 is N2S; a number of the second anti-reflective structures 150 is N2T, and the following conditions shown in Table 2 are satisfied. Therefore, the anti-reflective ability can be improved by the larger total number of the anti-reflective structures.

| Table 2 - 2nd Example of 1st Embodiment | | | |
|---|---|---|---|
| N1 | 2 | N2S | 720 |
| N2T | 1440 | N1 + N2T | 1442 |

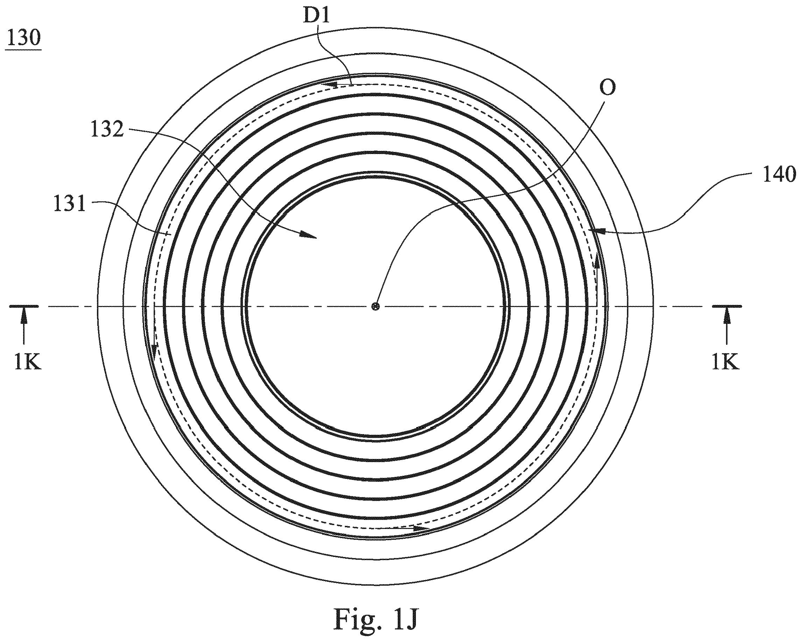

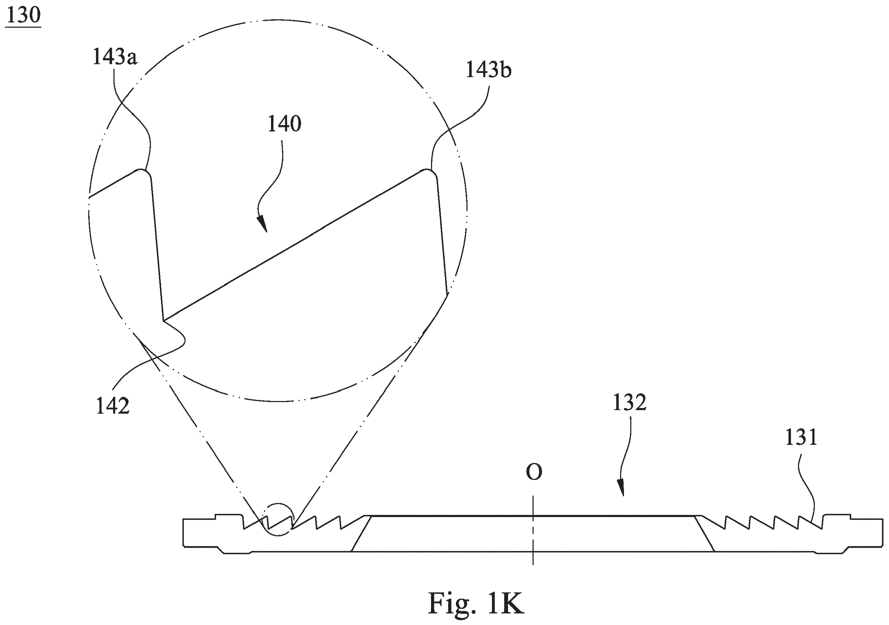

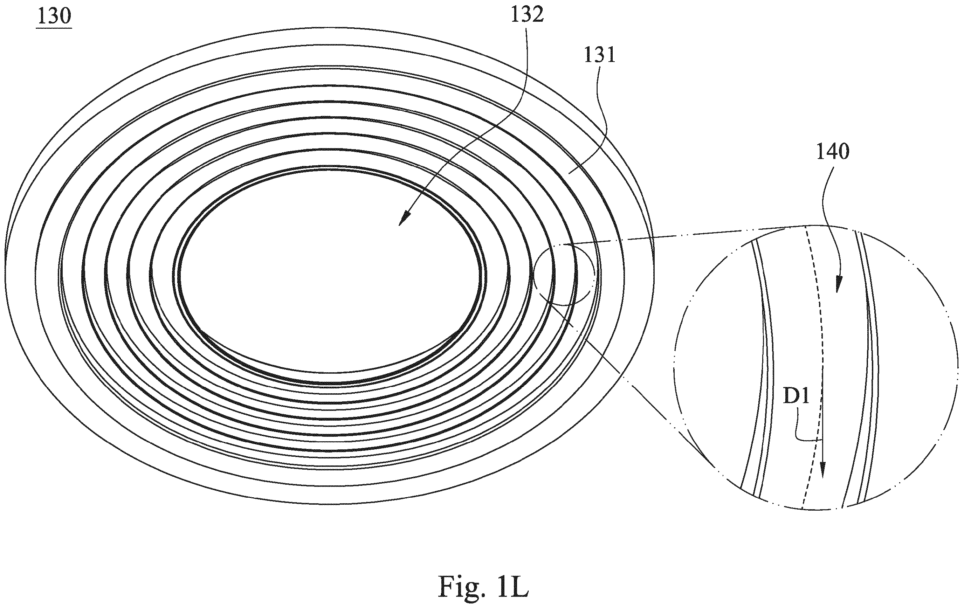

Fig. 1J is a schematic view of the light blocking element 130 of the 3rd Example according to the 1st Embodiment in Fig. 1A. Fig. 1K is a partial enlarged view of a cross-sectional view of the light blocking element 130 of the 3rd Example along line 1K-1K according to the 1st Embodiment in Fig. 1J. Fig. 1L is a partial enlarged view of the light blocking element 130 of the 3rd Example according to the 1st Embodiment in Fig. 1J. In Fig. 1J to Fig. 1L, the light blocking element 130 includes an opening hole 132, and the light blocking surface 131 is adjacent to the opening hole 132. The light blocking surface 131 has a plurality of first anti-reflective structures 140, and each of the first anti-reflective structures

140 extends toward a first direction D1, the first direction D1 is orthogonal to the optical axis O.

In Fig. 1J to Fig. 1L, a number N1 of the first anti-reflective structures 140 is 5. Therefore, the anti-reflective ability can be improved, and can take into account both the anti-reflective performance and the mass production.

<2nd Embodiment>

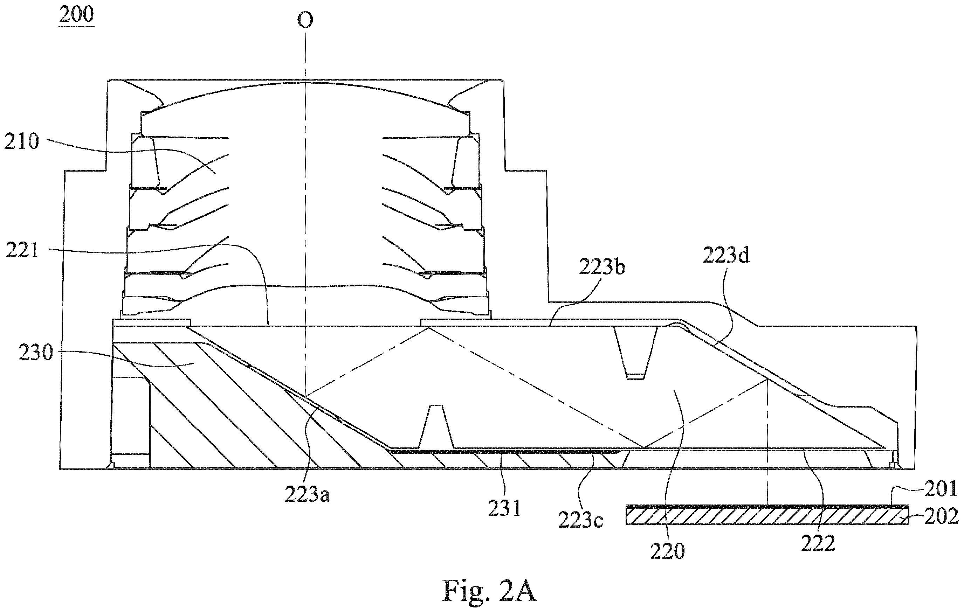

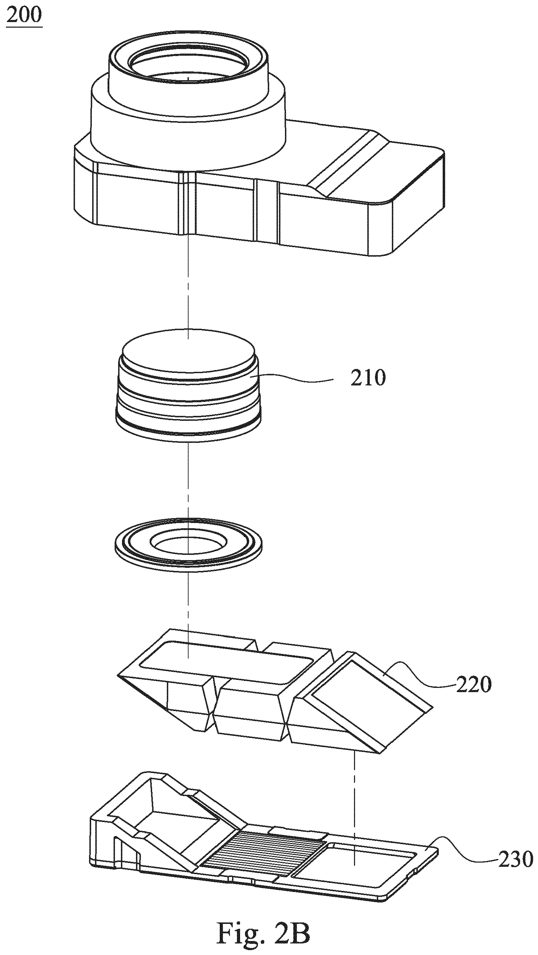

Fig. 2A is a schematic view of an optical imaging module 200 according to the 2nd Embodiment of the present disclosure. Fig. 2B is an exploded view of the optical imaging module 200 according to the 2nd Embodiment in Fig. 2A. In Fig. 2A and Fig. 2B, the optical imaging module 200 includes an optical imaging lens assembly 210, a light path folding element 220 and a light blocking element 230. The optical imaging lens assembly 210 includes at least one optical lens element (not shown in drawings), and an optical axis O passes through the optical lens element. The light path folding element 220 has an incident surface 221, an emitting surface 222 and four optical reflecting surfaces 223a, 223b, 223c, 223d, and the light path folding element 220 is disposed on an image side of the optical imaging lens assembly 210. Specifically, according to the 2nd Embodiment in Fig. 2A, the light path folding element 220 includes two optical surfaces, one of the optical surface is opposite to the optical imaging lens assembly 210, and includes the incident surface 221 and the optical reflecting surface 223b at the same time, while the other optical surface is opposite to the image sensor 202, and includes the emitting surface 222 and the optical reflecting surface 223c at the same time. The image sensor 202 is disposed on an imaging surface 201 of the optical imaging module 200. Therefore, after a light enters the light path folding element 220 from the incident surface 221, the light is internally reflected by the optical reflecting surfaces 223a, 223b, 223c, 223d in sequence, and the light enters the image sensor 202 from the emitting surface 222 finally. The light blocking element 230 is a fixing element, which is disposed on the light path folding element 220, and the light blocking element 230 includes a light blocking surface 231. The light blocking surface 231 is opposite to the optical reflecting surface 223c of the light path folding element 220. Therefore, the light is reflected by the light path folding element 220, which is favorable for the miniaturization design of the optical imaging module 200.

In detail, the optical axis O of the optical imaging module 200 can travel through the incident surface 221, the emitting surface 222 and the optical reflecting surfaces 223a, 223b, 223c, 223d of the light path folding element 220, so that the travelling direction of the optical axis O of the optical imaging module 200 can be changed by the light path folding element 220. Further, the optical reflecting surfaces 223a, 223b, 223c, 223d can utilize the high-reflecting film to reflect the imaging light; or the optical reflecting surfaces 223a, 223b, 223c, 223d also can utilize the optical total reflection phenomenon to reflect the imaging light.

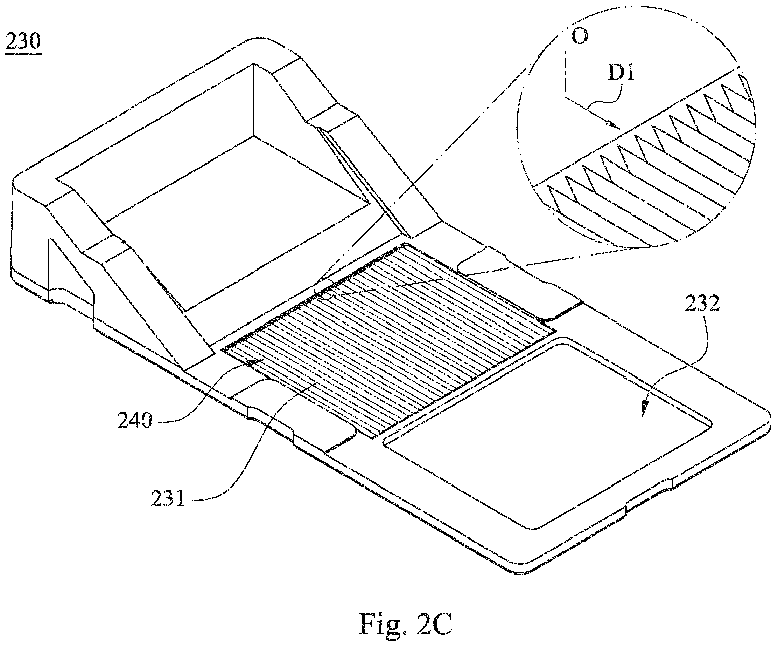

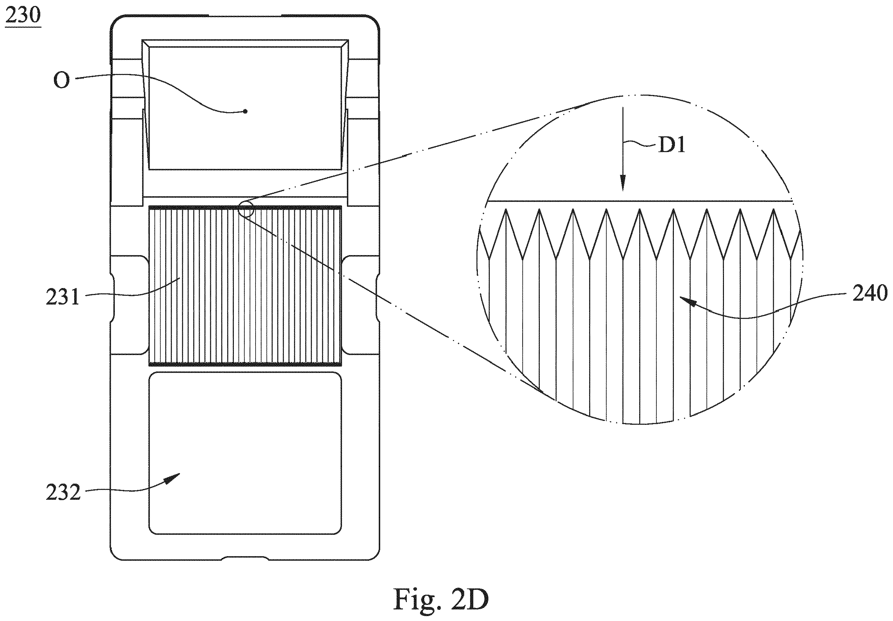

Fig. 2C is a partial enlarged view of the light blocking element 230 of the 1st Example according to the 2nd Embodiment in Fig. 2A. Fig. 2D is another partial enlarged view of the light blocking element 230 of the 1st Example according to the 2nd Embodiment in Fig. 2A. In Fig. 2C and Fig. 2D, the light blocking element 230 includes an opening hole 232, and the opening hole 232 is corresponded to the emitting surface 222 of the light path folding element 220. The light blocking surface 231 is adjacent to the opening hole 232, and the light blocking surface 231 has a plurality of first anti-reflective structures 240, each of the first anti-reflective structures 240 is recessed from the light blocking surface 231 toward a direction away from the light path folding element 220.

Further, each of the first anti-reflective structures 240 extends toward a first direction D1, and the first direction D1 is orthogonal to the optical axis O. The stray light is incident along the direction of the optical axis O, so that it is favorable for effectively reducing the reflection of the stray light by arranging the first anti-reflective structure 240 extending along a direction orthogonal to the optical axis O. Specifically, the incident surface 221, the emitting surface 222 and the optical reflecting surfaces 223a, 223b, 223c, 223d of the light path folding element 220 are all the interfaces that are easy to form the stray light, so that the reflection of the stray light can be avoided by disposing the light blocking surface 231 with the first anti-reflective structures 240, which is favorable for improving the imaging quality.

In Fig. 2C and Fig. 2D, a number N1 of the first anti-reflective structures 240 is 120. Therefore, the anti-reflective ability can be improved.

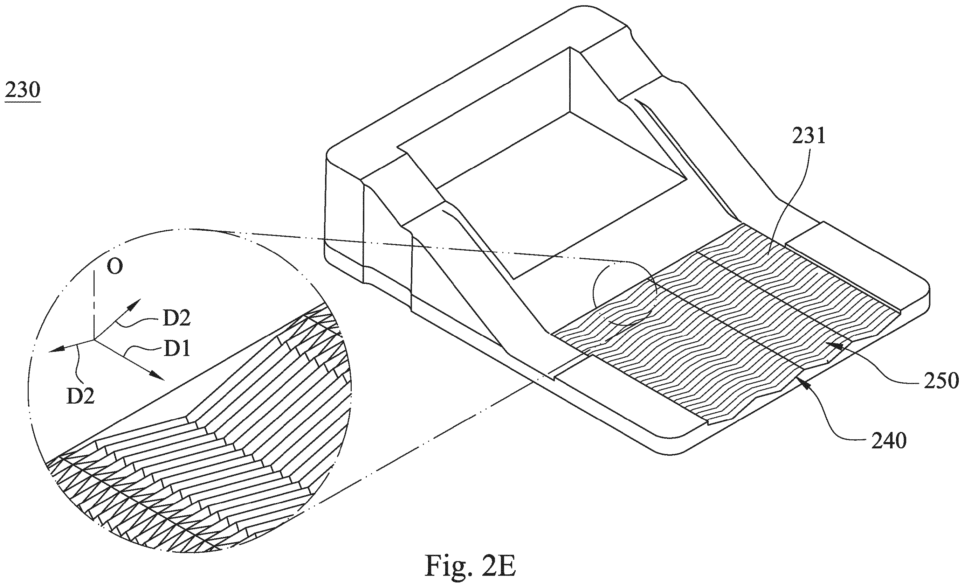

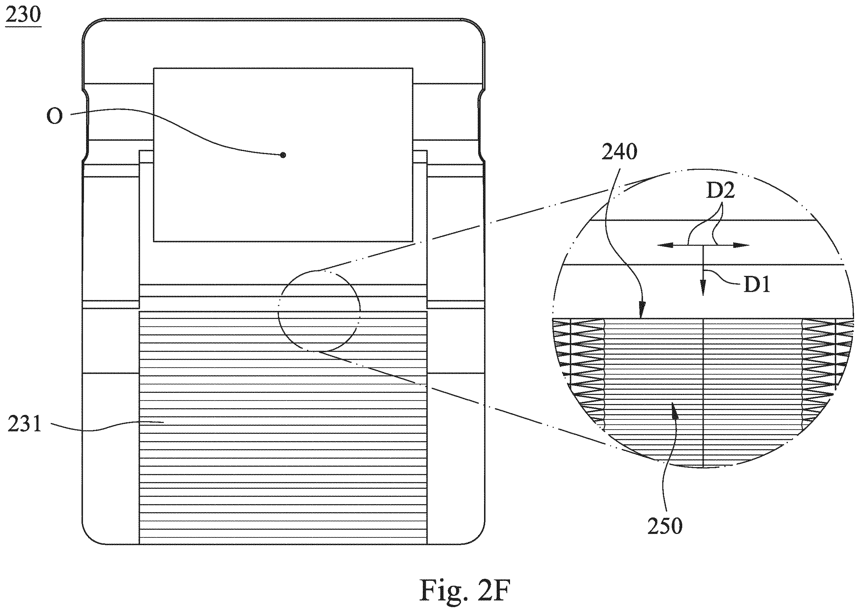

Fig. 2E is a partial enlarged view of the light blocking element 230 of the 2nd Example according to the 2nd Embodiment in Fig. 2A. Fig. 2F is another partial enlarged view of the light blocking element 230 of the 2nd Example according to the 2nd Embodiment in Fig. 2A. In Fig. 2E and Fig. 2F, the light blocking surface 231 of the light blocking element 230 has a plurality of first anti-reflective structures 240, each of the first anti-reflective structures 240 extends toward a first direction D1, and the first direction D1 is orthogonal to the optical axis O.

Further, a surface (not shown in drawings) of each of the first anti-reflective structures 240 has a plurality of second anti-reflective structures 250. Each of the second anti-reflective structures 250 is recessed on the surface of each of the first anti-reflective structures 240, and each of the second anti-reflective structures 250 extends toward a second direction D2. Therefore, the second anti-reflective structures 250 disposed on the first anti-reflective structures 240 can improve the anti-reflective effect. Further, the first anti-reflective structures 240 and the second anti-reflective structures 250 are integrally formed with the light blocking element 230, so that the production time can be reduced. The second anti-reflective structures 250 are regularly arranged along an extension path in the first direction D1, thus the stability of the quality can be improved. Further, the second direction D2 is orthogonal to the first direction D1, so that the reflection path of the stray light can be destroyed by two anti-reflective structures with different extending directions.

In Fig. 2E and Fig. 2F, a number of the first anti-reflective structures 240 is N1; a number of the second anti-reflective structures 250 on one first anti-reflective structure 240 is N2S; a number of the second anti-reflective structures 250 is N2T, and the following conditions shown in Table 3 are satisfied. Therefore, the anti-reflective ability can be improved by two anti-reflective structures with the different setting densities and the appropriate number of the structures.

| Table 3 - 2nd Example of 2nd Embodiment | | | |
| --- | --- | --- | --- |
| N1 | 4 | N2S | 85 |
| N2T | 340 | N1 + N2T | 344 |

<3rd Embodiment>

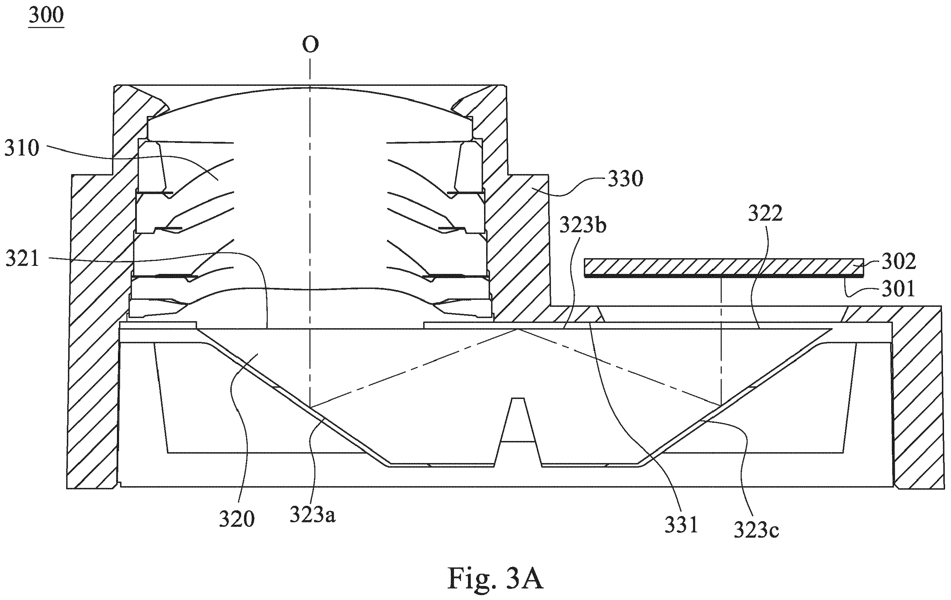

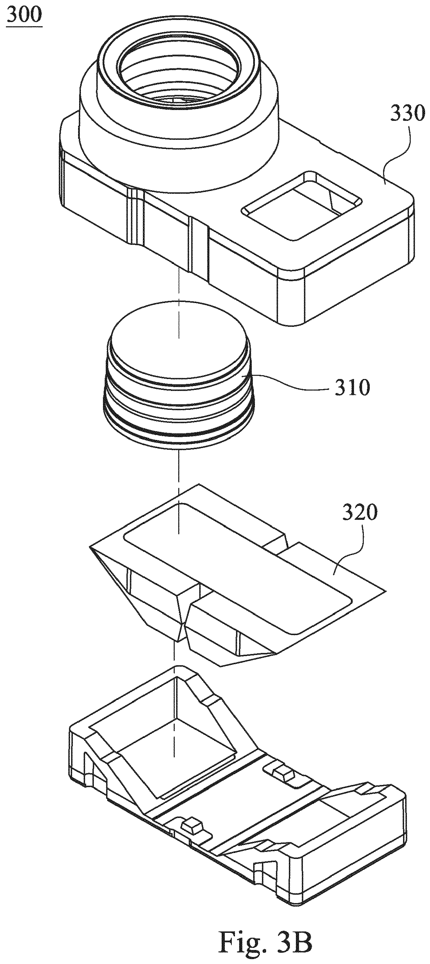

Fig. 3A is a schematic view of an optical imaging module 300 according to the 3rd Embodiment of the present disclosure. Fig. 3B is an exploded view of the optical imaging module 300 according to the 3rd Embodiment in Fig. 3A. In Fig. 3A and Fig. 3B, the optical imaging module 300 includes an optical imaging lens assembly 310, a light path folding element 320 and a light blocking element 330. The optical imaging lens assembly 310 includes at least one optical lens element (not shown in drawings), and an optical axis O passes through the optical lens element. The light path folding element 320 has an incident surface 321, an emitting surface 322 and three optical reflecting surfaces 323a, 323b, 323c, and the light path folding element 320 is disposed on an image side of the optical imaging lens assembly 310. Specifically, according to the 3rd Embodiment in Fig. 3A, the light path folding element 320 includes an optical surface, which is opposite to the optical imaging lens assembly 310 and the image sensor 302, and the optical surface includes the incident surface 321, the emitting surface 322 and the optical reflecting surface 323b at the same time, wherein the incident surface 321 is corresponded to the optical imaging lens assembly 310 and the emitting surface 322 is corresponded to the image sensor 302. The image sensor 302 is disposed on an imaging surface 301 of the optical imaging module 300. Therefore, after a light enters the light path folding element 320 from the incident surface 321, the light is internally reflected by the optical reflecting surfaces 323a, 323b, 323c in sequence, and the light enters the image sensor 302 from the emitting surface 322 finally. The light blocking element 330 is a lens carrier, which is disposed on the optical lens element, and the light blocking element 330 includes a light blocking surface 331. The light blocking surface 331 is opposite to the optical reflecting surface 323b of the light path folding element 320. Therefore, the light is reflected by the light path folding element 320, which is favorable for the miniaturization design of the optical imaging module 300.

In detail, the optical axis O of the optical imaging module 300 can travel through the incident surface 321, the emitting surface 322 and the optical reflecting surfaces 323a, 323b, 323c of the light path folding element 320, so that the travelling direction of the optical axis O of the optical imaging module 300 can be changed by the light path folding element 320. Further, the optical reflecting surfaces 323a, 323b, 323c can utilize the high-reflecting film to reflect the imaging light; or the optical reflecting surfaces 323a, 323b, 323c also can utilize the optical total reflection phenomenon to reflect the imaging light.

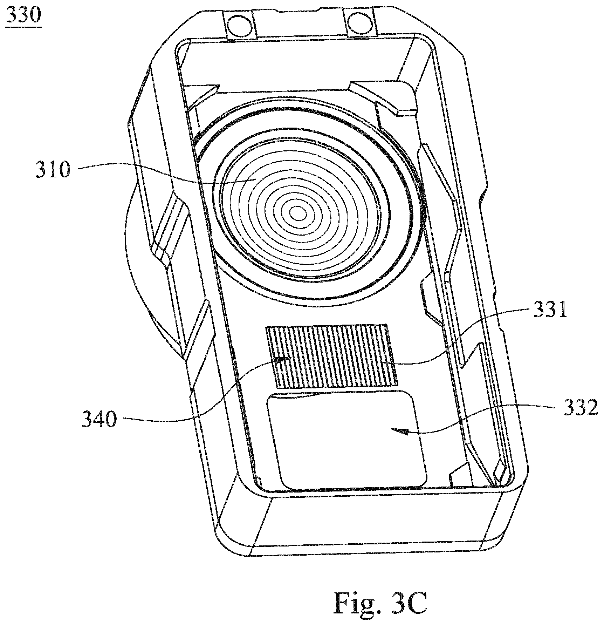

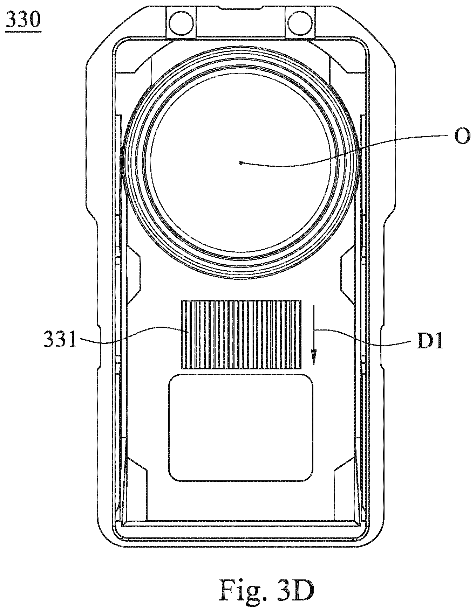

Fig. 3C is a schematic view of the light blocking element 330 of the 1st Example according to the 3rd Embodiment in Fig. 3A. Fig. 3D is another schematic view of the light blocking element 330 of the 1st Example according to the 3rd Embodiment in Fig. 3A. In Fig. 3C and Fig. 3D, the light blocking element 330 includes an opening hole 332, and the opening hole 332 is corresponded to the emitting surface 322 of the light path folding element 320. The light blocking surface 331 is adjacent to the opening hole 332, and the light blocking surface 331 has a plurality of first anti-reflective structures 340, each of the first anti-reflective structures 340 is recessed from the light blocking surface 331 toward a direction away from the light path folding element 320.

Further, each of the first anti-reflective structures 340 extends toward a first direction D1, and the first direction D1 is orthogonal to the optical axis O. The stray light is incident along the direction of the optical axis O, so that it is favorable for effectively reducing the reflection of the stray light by arranging the first anti-reflective structure 340 extending along a direction orthogonal to the optical axis O. Specifically, the incident surface 321, the emitting surface 322 and the optical reflecting surfaces 323a, 323b, 323c of the light path folding element 320 are all the interfaces that are easy to form the stray light, so that the reflection of the stray light can be avoided by disposing the light blocking surface 331 with the first anti-reflective structures 340, which is favorable for improving the imaging quality.

In Fig. 3C and Fig. 3D, a number N1 of the first anti-reflective structures 340 is 50. Therefore, the anti-reflective ability can be improved.

<4th Embodiment>

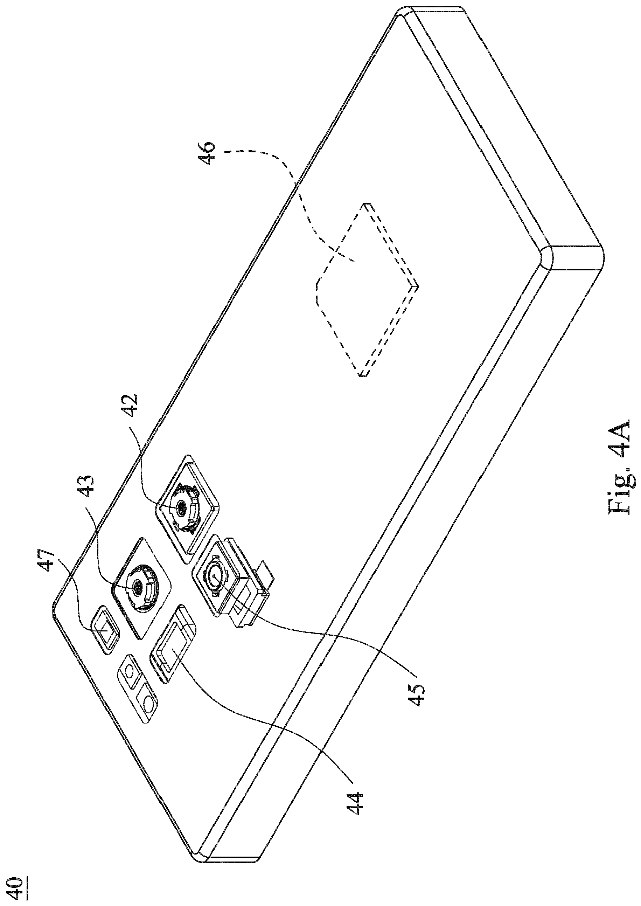

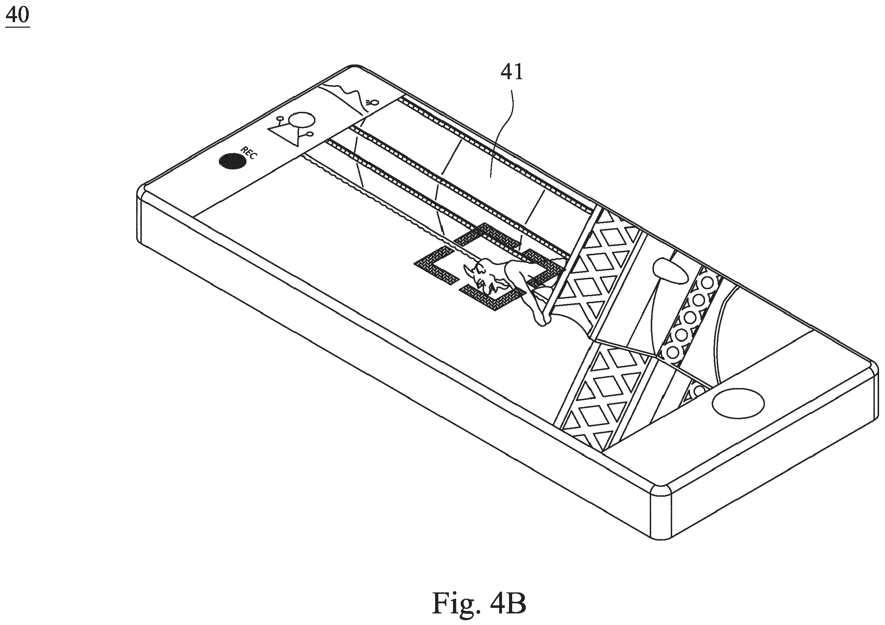

Fig. 4A is a schematic view of an electronic device 40 according to the 4th Embodiment of the present disclosure. Fig. 4B is another schematic view of the electronic device 40 according to the 4th Embodiment in Fig. 4A. In Fig. 4A and Fig. 4B, the electronic device 40 is a smart phone, and includes an optical imaging module (not shown in drawings) and a user interface 41. Furthermore, the optical imaging module includes an ultra-wide angle camera module 42, a high resolution camera module 43 and telephoto camera modules 44, 45, and the user interface 41 is a touch screen, which is not limited thereto. Specifically, the optical imaging module can be one of the optical imaging modules according to the aforementioned the 1st Embodiment to the 3rd Embodiment, but the present disclosure is not limited thereto.

Furthermore, users enter a shooting mode via the user interface 41, wherein the user interface 41 is for displaying the scene, and the shooting angle can be manually adjusted to switch the different optical imaging modules. At this moment, the imaging light is gathered on the image sensor via the optical imaging module, and an electronic signal about an image is output to an image signal processor (ISP) 46.

In Fig. 4A, to meet a specification of the electronic device 40, the electronic device 40 can further include an optical anti-shake mechanism (not shown in drawings). Furthermore, the electronic device 40 can further include at least one focusing assisting module (not shown in drawings) and at least one sensing element (not shown in drawings). The focusing assisting module can be a flash module 47 for compensating a color temperature, an infrared distance measurement component, a laser focus module, etc. The sensing element can have functions for sensing physical momentum and kinetic energy, such as an accelerator, a gyroscope, a Hall Effect Element, to sense shaking or jitters applied by hands of the user or external environments. Accordingly, the electronic device 40 equipped with an auto-focusing mechanism and the optical anti-shake mechanism can be enhanced to achieve the superior image quality. Furthermore, the electronic device 40 according to the present disclosure can have a capturing function with multiple modes, such as taking optimized selfies, high dynamic range (HDR) under a low light condition, 4K resolution recording, etc. Furthermore, the users can visually see a captured image of the camera through the user interface 41 and manually operate the view finding range on the user interface 41 to achieve the auto-focus function of what you see is what you get.

Moreover, the optical imaging module, the optical anti-shake mechanism, the sensing element and the focusing assisting module can be disposed on a flexible printed circuit board (FPC) (not shown in drawings) and electrically connected to the associated components, such as the image signal processor 46, via a connector (not shown in drawings) to perform a capturing process. Since the current electronic devices, such as smart phones, have a tendency of being compact, the way of firstly disposing the optical imaging module and related components on the flexible printed circuit board and secondly integrating the circuit thereof into the main board of the electronic device via the connector can satisfy the requirements of the mechanical design and the circuit layout of the limited space inside the electronic device, and obtain more margins. The autofocus function of the optical imaging module can also be controlled more flexibly via the touch screen of the electronic device. According to the 4th Embodiment, the electronic device 40 can include a plurality of sensing elements and a plurality of focusing assisting modules. The sensing elements and the focusing assisting modules are disposed on the flexible printed circuit board and at least one other flexible printed circuit board (not shown in drawings) and electrically connected to the associated components, such as the image signal processor 46, via corresponding connectors to perform the capturing process. In other examples (not shown in drawings), the sensing elements and the focusing assisting modules can also be disposed on the main board of the electronic device or carrier boards of other types according to requirements of the mechanical design and the circuit layout.

Furthermore, the electronic device 40 can further include, but not be limited to, a display, a control unit, a storage unit, a random access memory (RAM), a read-only memory (ROM), or the combination thereof.

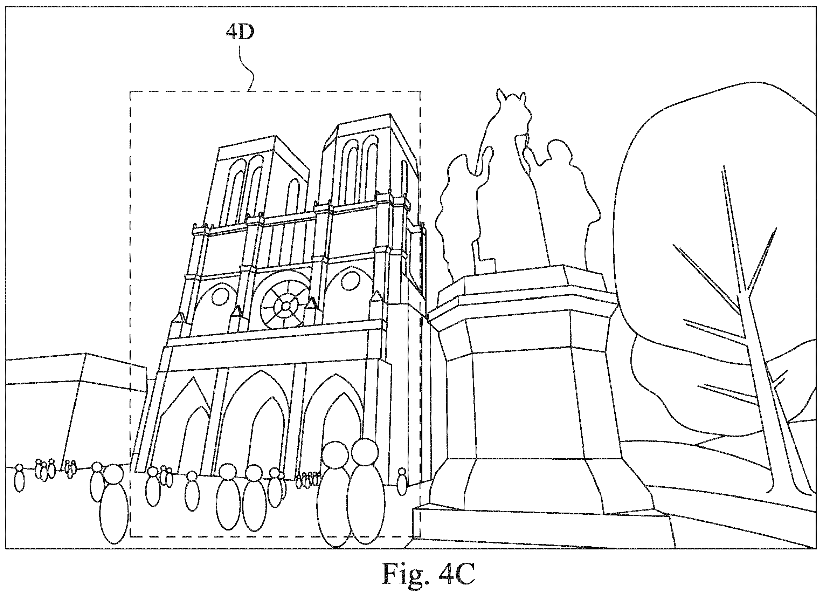

Fig. 4C is a schematic view of an image captured by the ultra-wide angle camera module 42 of the electronic device 40 according to the 4th Embodiment in Fig. 4A. In Fig. 4C, the larger range of the image can be captured via the ultra-wide angle camera module 42, and the ultra-wide angle camera module 42 can has the function of accommodating more wide range of the scene.

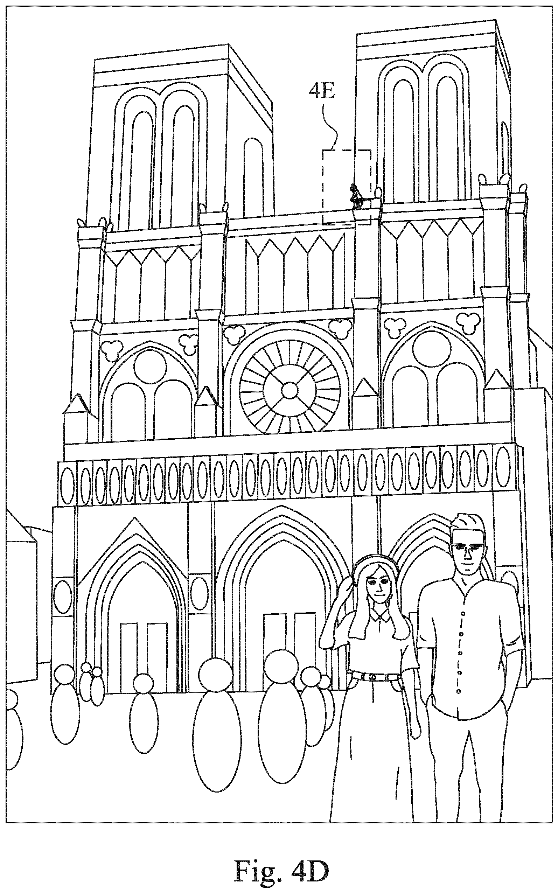

Fig. 4D is a schematic view of an image captured by the high resolution camera module 43 of the electronic device 40 according to the 4th Embodiment in Fig. 4A. In Fig. 4D, the image of the certain range with the high resolution can be captured via the high resolution camera module 43, and the high resolution camera module 43 has the function of the high resolution and the low deformation.

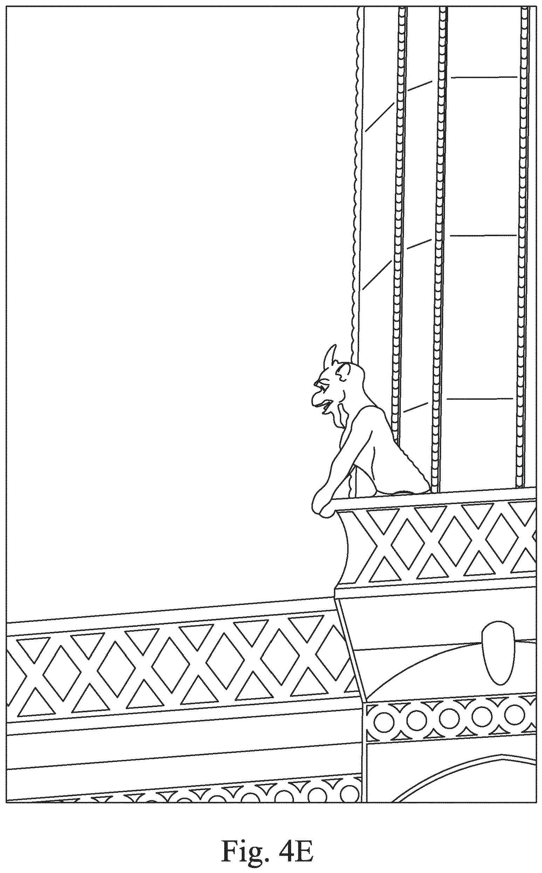

Fig. 4E is a schematic view of an image captured by the telephoto camera modules 44, 45 of the electronic device 40 according to the 4th Embodiment in Fig. 4A. In Fig. 4E, the telephoto camera modules 44, 45 have the enlarging function of the high magnification, and the distant image can be captured and enlarged with high magnification via the telephoto camera modules 44, 45.

In Figs. 4C to 4E, the zooming function can be obtained via the electronic device 40, when the scene is captured via the camera module with different focal lengths cooperated with the function of image processing.

<5th Embodiment>

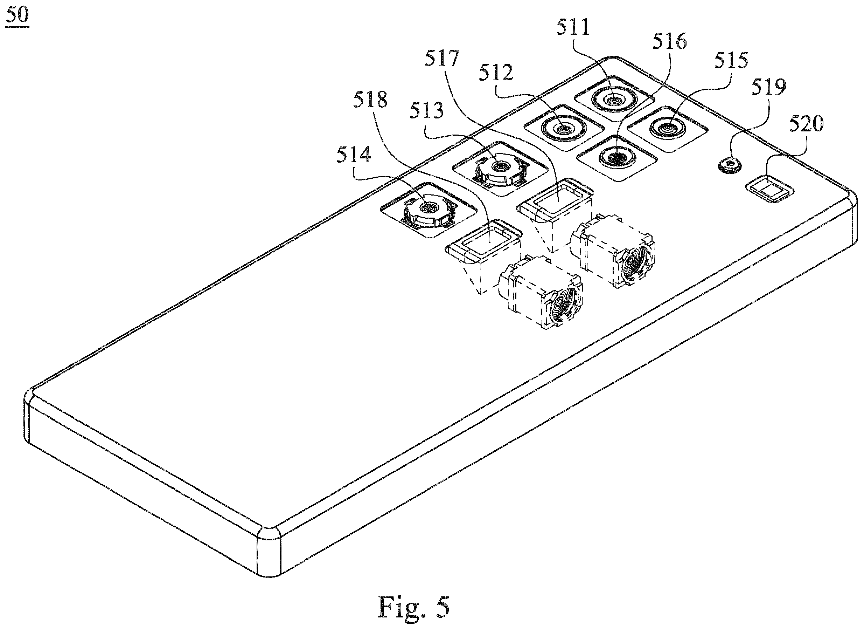

Fig. 5 is a schematic view of an electronic device 50 according to the 5th Embodiment of the present disclosure. In Fig. 5, the electronic device 50 is a smart phone, and includes an optical imaging module (not shown in drawings). Furthermore, the optical imaging module includes ultra-wide angle camera modules 511, 512, wide angle camera modules 513, 514, telephoto camera modules 515, 516, 517, 518, and a Time-Of-Fight (TOF) module 519. The TOF module 519 can be another type of the optical imaging module, and the disposition is not limited thereto. In detail, the optical imaging module can be one of the optical imaging modules according to the aforementioned the 1st Embodiment to the 3rd Embodiment, but the present disclosure is not limited thereto.

Further, the telephoto camera modules 517, 518 are configured to fold the light, but the present disclosure is not limited thereto.

To meet a specification of the electronic device 50, the electronic device 50 can further include an optical anti-shake mechanism (not shown in drawings). Furthermore, the electronic device 50 can further include at least one focusing assisting module (not shown in drawings) and at least one sensing element (not shown in drawings). The focusing assisting module can be a flash module 520 for compensating a color temperature, and infrared distance measurement component, a laser focus module, etc. The sensing element can have functions for sensing physical momentum and kinetic energy, such as an accelerator, a gyroscope, a Hall Effect Element, to sense shaking or jitters applied by hands of the user or external environments. Accordingly, the electronic device 50 equipped with an auto-focusing mechanism and the optical anti-shake mechanism can be enhanced to achieve the superior image quality. Furthermore, the electronic device 50 according to the present disclosure can have a capturing function with multiple modes, such as taking optimized selfies, High Dynamic Range (HDR) under a low light condition, 4K Resolution recording, etc.

Further, all of other structures and dispositions according to the 5th Embodiment are the same as the structures and the dispositions according to the 4th Embodiment, and will not be described again herein.

<6th Embodiment>

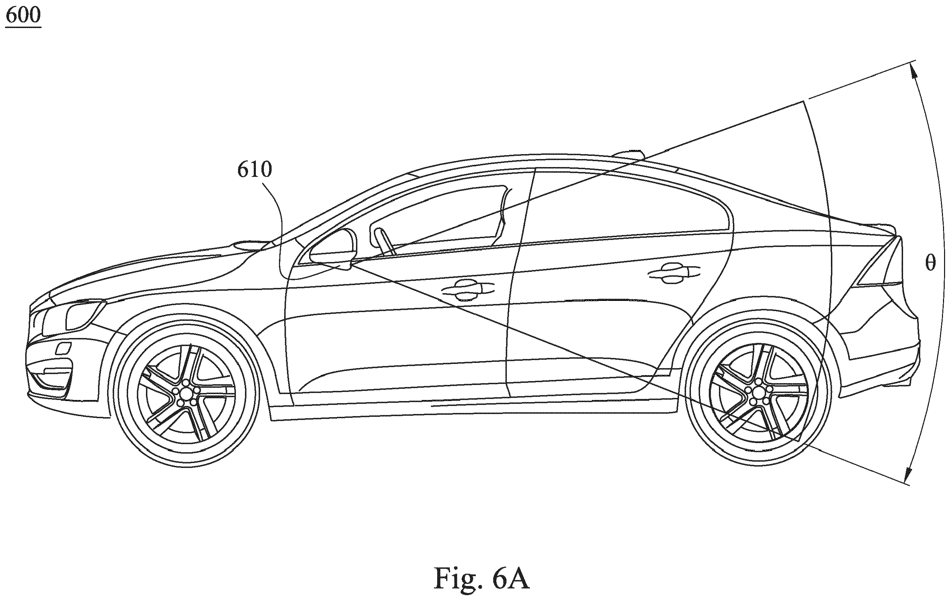

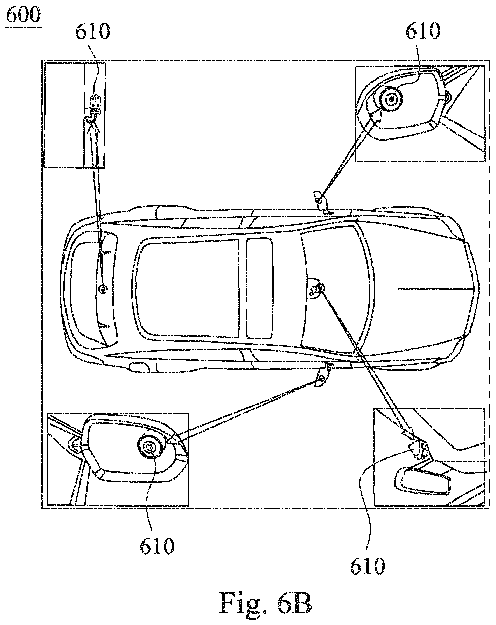

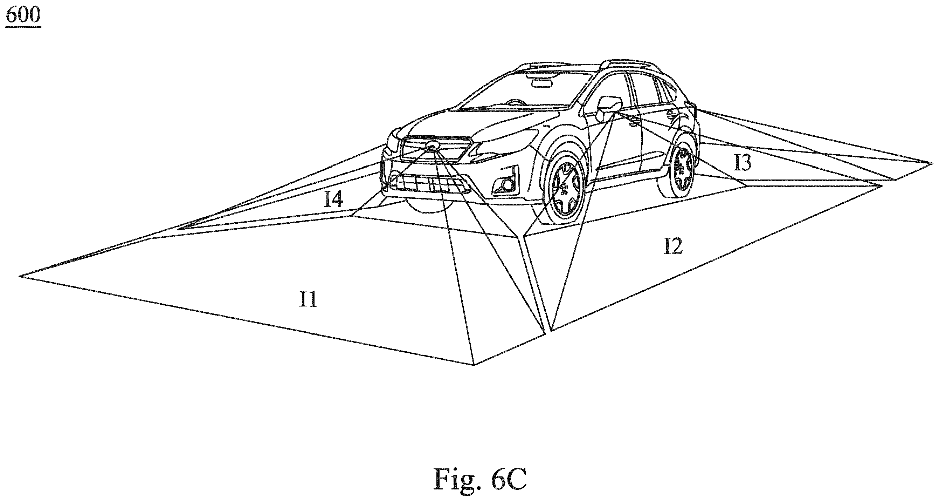

Fig. 6A shows a schematic view of a vehicle device 600 according to the 6th Embodiment of the present disclosure. Fig. 6B shows another schematic view of the vehicle device 600 according to the 6th Embodiment in Fig. 6A. Fig. 6C shows further another schematic view of the vehicle device 600 according to the 6th Embodiment in Fig. 6A. In Fig. 6A to Fig. 6C, the vehicle device 600 includes a plurality of optical imaging modules 610. In the 6th Embodiment, a number of the optical imaging modules 610 is six, and the optical imaging module 610 can be one of the optical imaging modules according to the aforementioned the 1st Embodiment to the 3rd Embodiment, but the present disclosure is not limited thereto.

In Fig. 6A and Fig. 6B, the optical imaging module 610 is a vehicle camera module, and two of the optical imaging modules 610 are located under two rear view mirrors on the left side and the right side, respectively. Each of the two optical imaging modules 610 captures image information from a field of view $\theta$. Specifically, the field of view $\theta$ can satisfy the following condition: 40 degrees < $\theta$ < 90 degrees. Hence, the image information in the region of two lanes on the left side and the right side can be captured.

In Fig. 6B, another two of the optical imaging modules 610 can be disposed in an inner space of the vehicle device 600. Specifically, the aforementioned two optical imaging modules 610 can be disposed near a rear view mirror in the vehicle device 600 and near a rear window, respectively, or can be disposed on non-mirror surfaces of two rear view mirrors on left side and right side of the vehicle device 600, respectively, but not limited thereto. Therefore, it is favorable for the user obtaining the external space information out of the driving seat, and the angle of view can be provided widely to decrease the blind spot, which is favorable for improving driving safety.

In Fig. 6C, further another two of the optical imaging modules 610 can be disposed at the front end and the rear end of the vehicle device 600. Furthermore, the traffic information outside the vehicle can be identified helpfully by the arrangement of the optical imaging modules 610 disposed at the front end, the rear end and below the left and right rear view mirrors of the vehicle device 600. The traffic information outside the vehicle can be I1, I2, I3, I4, but not limited thereto. Therefore, it is helpful to achieve the function of autopilot.

**Claims**

**1.** An optical imaging module (100), **characterized in** comprising:

an optical imaging lens assembly (110) comprising at least one optical lens element, and an optical axis (O) passing through the at least one optical lens element;
a light path folding element (120) having an incident surface (121), an emitting surface (122) and at least one optical reflecting surface (123a, 123b, 123c, 123d), and the light path folding element (120) disposed on an image side of the optical imaging lens assembly (110); and

a light blocking element (130) disposed on at least one of the at least one optical lens element and the light path folding element (120), and the light blocking element (130) comprising:

an opening hole (132) corresponded to one of the incident surface (121) and the emitting surface (122) of the light path folding element (120); and
a light blocking surface (131) adjacent to the opening hole (132), and the light blocking surface (131) opposite to one of the incident surface (121), the emitting surface (122) and the at least one optical reflecting surface (123a, 123b, 123c, 123d) of the light path folding element (120);

wherein the light blocking surface (131) has a plurality of first anti-reflective structures (140), and each of the first anti-reflective structures (140) is recessed from the light blocking surface (131) toward a direction away from the light path folding element (120).

2. The optical imaging module (100) of claim 1, wherein the first anti-reflective structures (140) are integrally formed with the light blocking element (130).

3. The optical imaging module (100) of claims 1 or 2, wherein each of the first anti-reflective structures (140) extends toward a first direction (D1), and the first direction (D1) is orthogonal to the optical axis (O).

4. The optical imaging module (100) of any one of claims 1 to 3, wherein a number of the first anti-reflective structures (140) is N1, and the following condition is satisfied:

$$2 \leq N1 \leq 246.$$

5. The optical imaging module (100) of claim 4, wherein the number of the first anti-reflective structures (140) is N1, and the following condition is satisfied:

$$2 \leq N1 \leq 52.$$

6. The optical imaging module (100) of any one of claims 1 to 5, wherein on a cross-sectional plane vertical to a first direction (D1), each of the first anti-reflective structures (140) has a bottom end (142) and two top ends (143a, 143b), and distances from the bottom end (142) to the two top ends (143a, 143b) are different, respectively.

7. The optical imaging module (100) of any one of claims 1 to 6, wherein each of the first anti-reflective structures (140) extends toward a first direction (D1), a surface (141) of each of the first anti-reflective structures (140) has a plurality of second anti-reflective structures (150), each of the second anti-reflective structures (150) is recessed on the surface (141) of each of the first anti-reflective structures (140), and each of the second anti-reflective structures (150) extends toward a second direction (D2).

8. The optical imaging module (100) of claim 7, wherein the second anti-reflective structures (150) are integrally formed with the light blocking element (130).

9. The optical imaging module (100) of claims 7 or 8, wherein the second direction (D2) is orthogonal to the first direction (D1).

10. The optical imaging module (100) of any one of claims 7 to 9, wherein the second anti-reflective structures (150) are regularly arranged along an extension path in the first direction (D1).

11. The optical imaging module (100) of any one of claims 7 to 10, wherein on the light blocking element (130), a number of the first anti-reflective structures (140) is N1, a number of the second anti-reflective structures (150) is N2T, and the following condition is satisfied:

$$N1 < N2T.$$

12. The optical imaging module (100) of any one of claims 7 to 11, wherein a number of the second anti-reflective structures (150) on one first anti-reflective structure (140) is N2S, and the following condition is satisfied:

$$68 \leq N2S \leq 1100.$$

13. The optical imaging module (100) of any one of claims 7 to 12, wherein on the light blocking element (130), the number of the first anti-reflective structures (140) is N1, the number of the second anti-reflective structures (150) is N2T, and the following condition is satisfied:

$$570 \leq N1 + N2T \leq 3620.$$

14. An optical imaging module (100), **characterized in** comprising:

an optical imaging lens assembly (110) comprising at least one optical lens element, and an optical axis (O) passing through the at least one optical lens element;
a light path folding element (120) having an incident surface (121), an emitting surface (122) and at least one optical reflecting surface (123a, 123b, 123c, 123d), and the light path folding element (120) disposed on an image side of the optical imaging lens assembly (110); and
a light blocking element (130) disposed on one of the at least one optical lens element and the light path folding element (120), and the light blocking element (130) comprising:
a light blocking surface (131) opposite to one of the incident surface (121), the emitting surface (122) and the at least one optical reflecting surface (123a, 123b, 123c, 123d) of the light path folding element (120);
wherein the light blocking surface (131) has a plurality of first anti-reflective structures (140), and each of the first anti-reflective structures (140) is recessed from the light blocking surface (131) toward a direction away from the light path folding element (120).

15. The optical imaging module (100) of claim 14, wherein the first anti-reflective structures (140) are integrally formed with the light blocking element (130).

16. The optical imaging module (100) of claims 14 or 15, wherein each of the first anti-reflective structures (140) extends toward a first direction (D1), and the first direction (D1) is orthogonal to the optical axis (O).

17. The optical imaging module (100) of any one of claims 14 to 16, wherein a number of the first anti-reflective structures (140) is N1, and the following condition is satisfied:

$$2 \leq N1 \leq 246.$$

18. The optical imaging module (100) of claim 17, wherein the number of the first anti-reflective structures (140) is N1, and the following condition is satisfied:

$$2 \leq N1 \leq 52.$$

19. The optical imaging module (100) of any one of claims 14 to 18, wherein on a cross-sectional plane vertical to a first direction (D1), each of the first anti-reflective structures (140) has a bottom end (142) and two top ends (143a, 143b), and distances from the bottom end (142) to the two top ends (143a, 143b) are different, respectively.

20. The optical imaging module (100) of any one of claims 14 to 19, wherein each of the first anti-reflective structures (140) extends toward a first direction (D1), a surface (141) of each of the first anti-reflective structures (140) has a plurality of second anti-reflective structures (150), each of the second anti-reflective structures (150) is recessed on the surface (141) of each of the first anti-reflective structures (140), and each of the second anti-reflective structures (150) extends toward a second direction (D2).

21. The optical imaging module (100) of claim 20, wherein the second anti-reflective structures (150) are integrally formed with the light blocking element (130).

22. The optical imaging module (100) of claims 20 or 21, wherein the second direction (D2) is orthogonal to the first direction (D1).

23. The optical imaging module (100) of any one of claims 20 to 22, wherein the second anti-reflective structures (150) are regularly arranged along an extension path in the first direction (D1).

24. The optical imaging module (100) of any one of claims 20 to 23, wherein on the light blocking element (130), a number of the first anti-reflective structures (140) is N1, a number of the second anti-reflective structures (150) is N2T, and the following condition is satisfied:

$$N1 < N2T.$$

25. The optical imaging module (100) of any one of claims 20 to 24, wherein a number of the second anti-reflective structures (150) on one first anti-reflective structure (140) is N2S, and the following condition is satisfied:

$$68 \le N2S \le 1100.$$

26. The optical imaging module (100) of any one of claims 20 to 25, wherein on the light blocking element (130), the number of the first anti-reflective structures (140) is N1, the number of the second anti-reflective structures (150) is N2T, and the following condition is satisfied:

$$570 \le N1 + N2T \le 3620.$$

27. An electronic device (40), **characterized in** comprising:
the optical imaging module (100) of any one of claims 1 to 13.

28. An electronic device (40), **characterized in** comprising:
the optical imaging module (100) of any one of claims 14 to 26.

Fig. 1A

EP 4 403 997 A1

Fig. 1B

100

110

130

120

Fig. 1C

Fig. 1D

EP 4 403 997 A1

Fig. 1E

EP 4 403 997 A1

Fig. 1F

Fig. 1G

Fig. 1H

EP 4 403 997 A1

Fig. 1I

EP 4 403 997 A1

Fig. 1J

EP 4 403 997 A1

130

143a

143b

140

142

132

O

131

Fig. 1K

Fig. 1L

Fig. 2A

200

210

220

230

Fig. 2B

Fig. 2C

Fig. 2D

EP 4 403 997 A1

230

231

250

240

O

D2

D1

D2

Fig. 2E

Fig. 2F

EP 4 403 997 A1

Fig. 3A

EP 4 403 997 A1

300

330

310

320

## Fig. 3B

330

310

331

332

340

Fig. 3C

Fig. 3D

EP 4 403 997 A1

Fig. 4A

EP 4 403 997 A1

Fig. 4B

4D

Fig. 4C

4E

Fig. 4D

Fig. 4E

Fig. 5

EP 4 403 997 A1

600

610

Fig. 6A

600

610

610

610

610

Fig. 6B

600

I1 I2 I3 I4

Fig. 6C

EP 4 403 997 A1

Europäisches
Patentamt

European
Patent Office

Office européen
des brevets

# EUROPEAN SEARCH REPORT

**Application Number**

EP 24 15 2417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 217 404 597 U (LARGAN PRECISION CO LTD) 9 September 2022 (2022-09-09) | 1-4, 14-17, 27,28 | INV.<br>G03B17/17<br>G03B30/00 |
| Y | * figures 17,24 * | 5-13, 18-26 | G02B5/00 |
| | & US 2023/324656 A1 (TSAI CHUN-HUA [TW] ET AL) 12 October 2023 (2023-10-12) <br> * paragraphs [0094], [0101], [0103] * <br> * figures 17,24 * | | |
| | ----- | | |
| Y | US 2021/364731 A1 (CHANG LIN-AN [TW] ET AL) 25 November 2021 (2021-11-25) <br> * paragraph [0090] * <br> * figures 3A-3F * | 5,18 | |
| | ----- | | |
| Y | US 2022/082735 A1 (YANG SO MI [KR] ET AL) 17 March 2022 (2022-03-17) <br> * paragraph [0174] * <br> * figure 14 * | 5,18 | |
| | ----- | | |
| Y | US 2022/365254 A1 (TSAI CHUN-HUA [TW] ET AL) 17 November 2022 (2022-11-17) <br> * paragraphs [0073], [0121] * <br> * figures 3,4,7-10 * | 6,19 | **TECHNICAL FIELDS SEARCHED (IPC)**<br>G03B<br>G02B |
| | ----- | | |
| Y | US 2022/179290 A1 (LIN CHENG-FENG [TW] ET AL) 9 June 2022 (2022-06-09) <br> * paragraphs [0065], [0066] * <br> * figure 1C * | 6,19 | |
| | ----- | | |
| Y | US 2006/119919 A1 (WATSON MATHEW D [US] ET AL) 8 June 2006 (2006-06-08) <br> * paragraph [0034] * <br> * figure 7 * | 7-13, 20-26 | |
| | ----- | | |

The present search report has been drawn up for all claims

| Place of search | Date of completion of the search | Examiner |
|---|---|---|
| Munich | 13 June 2024 | Bodin, Carl-Magnus |

EPO FORM 1503 03.82 (P04C01)

## ANNEX TO THE EUROPEAN SEARCH REPORT
## ON EUROPEAN PATENT APPLICATION NO.

EP 24 15 2417

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | | Publication date | Patent family member(s) | | Publication date |
|---|---|---|---|---|---|
| CN 217404597 | U | 09-09-2022 | BR | 102023005261 A2 | 24-10-2023 |
| | | | CN | 116931210 A | 24-10-2023 |
| | | | CN | 217404597 U | 09-09-2022 |
| | | | EP | 4258035 A1 | 11-10-2023 |
| | | | TW | 202340780 A | 16-10-2023 |
| | | | US | 2023324656 A1 | 12-10-2023 |
| US 2021364731 | A1 | 25-11-2021 | CN | 114089502 A | 25-02-2022 |
| | | | CN | 115933126 A | 07-04-2023 |
| | | | CN | 115933127 A | 07-04-2023 |
| | | | CN | 115980974 A | 18-04-2023 |
| | | | CN | 117555191 A | 13-02-2024 |
| | | | CN | 213780512 U | 23-07-2021 |
| | | | TW | 202144890 A | 01-12-2021 |
| | | | US | 2021364731 A1 | 25-11-2021 |
| | | | US | 2024069305 A1 | 29-02-2024 |
| | | | US | 2024159986 A1 | 16-05-2024 |
| US 2022082735 | A1 | 17-03-2022 | CN | 114265270 A | 01-04-2022 |
| | | | CN | 215181360 U | 14-12-2021 |
| | | | KR | 20220036688 A | 23-03-2022 |
| | | | KR | 20230084109 A | 12-06-2023 |
| | | | TW | 202229936 A | 01-08-2022 |
| | | | TW | 202405483 A | 01-02-2024 |
| | | | US | 2022082735 A1 | 17-03-2022 |
| US 2022365254 | A1 | 17-11-2022 | CN | 115343820 A | 15-11-2022 |
| | | | CN | 215116943 U | 10-12-2021 |
| | | | TW | 202244588 A | 16-11-2022 |
| | | | US | 2022365254 A1 | 17-11-2022 |
| US 2022179290 | A1 | 09-06-2022 | CN | 112394466 A | 23-02-2021 |
| | | | CN | 116125622 A | 16-05-2023 |
| | | | CN | 210982875 U | 10-07-2020 |
| | | | TW | 202107188 A | 16-02-2021 |
| | | | US | 2021048733 A1 | 18-02-2021 |
| | | | US | 2022179290 A1 | 09-06-2022 |
| US 2006119919 | A1 | 08-06-2006 | US | 2006119919 A1 | 08-06-2006 |
| | | | WO | 2006091253 A2 | 31-08-2006 |

EPO FORM P0459

For more details about this annex : see Official Journal of the European Patent Office, No. 12/82